# EUROPEAN PATENT SPECIFICATION

(11) **EP 2 784 116 B1**
(45) Date of publication and mention of the grant of the patent: **12.10.2016**
(21) Application number: 12851413.0
(22) Date of filing: 21.11.2012
(51) Int. Cl.: C08L 11/00, C08K 3/22, C08K 3/36, C08L 9/00, C08L 9/06, F16L 11/04, B32B 25/02, B32B 25/04, B32B 25/12, B32B 25/14, F16L 11/12, B32B 25/16, B32B 1/08, F16L 11/08

(54) **RUBBER COMPOSITION FOR HOSES, AND HOSE**
KAUTSCHUKZUSAMMENSETZUNG FÜR SCHLÄUCHE UND SCHLAUCH
COMPOSITION DE CAOUTCHOUC DESTINÉE À DES FLEXIBLES ET FLEXIBLE

(30) Priority: 22.11.2011 JP 2011255393; 22.11.2011 JP 2011255454; 28.11.2011 JP 2011259520; 28.11.2011 JP 2011259584
(43) Date of publication of application: 01.10.2014
(73) Proprietor: Bridgestone Corporation, Tokyo 104-8340 (JP)
(72) Inventor: TSUNENISHI, Youhei, Yokohama-shi Kanagawa 244-8510 (JP)
(74) Representative: Oxley, Robin John George
(86) International application number: PCT/JP2012/007512
(87) International publication number: WO 2013/076989

(56) References cited:
- GB-A- 1 272 565
- GB-A- 1 342 613
- JP-A- H0 420 535
- JP-A- H02 163 140
- JP-A- 2000 017 112
- JP-A- 2005 111 901
- JP-A- 2010 121 006
- JP-A- 2011 001 528
- DATABASE WPI Week 198347 Thomson Scientific, London, GB; AN 1983-825705 XP002740858, -& SU 992 537 A (KIEV VULKAN SYNTH) 30 January 1983 (1983-01-30)

## Description

The present invention relates to a rubber composition for a hose, and a hose, in particular to a rubber composition for a hose, and a hose that can improve flame retardancy (in particular, shortening of afterglow response) and wear resistance, and ensure workability

### BACKGROUND ART

Regarding a hydraulic hose used in construction machinery and the like, consideration on improving weather resistance, fatigue resistance, wear resistance, workability and the like have been made (e.g. see Patent Documents 1 and 2).

Recently, use of the hydraulic hose in collieries and mines is increasing, and improvement in flame retardancy is required considering safety during work. Here, flame retardancy required for the hydraulic hose is defined mainly by MSHA standards (Mine Safety and Health Administration standards).

In order to exhibit flame retardancy, consideration has been made to add a large amount of metal hydroxide compound (e.g. aluminum hydroxide, magnesium hydroxide) while using a halogen based polymer (e.g. chloroprene rubber (CR)) that emits inert gas during combustion as a rubber composition for a hose.

However, it is known that, since chloroprene rubber (CR) as a halogen based polymer has low storage stability, a rubber composition using chloroprene rubber (CR) has difficulty in workability when using it to manufacture a hose. Further, it is known that, since metal hydroxide compounds have low reinforcing properties, wear resistance of a rubber composition using a metal hydroxide compound is drastically degraded, and therefore life of the hose is shortened. Further, in a case where wear life is considered and the thickness of an outer cover rubber is increased, it would be inferior in softening, weight saving and space saving as a hose.

Therefore, development of rubber with excellent wear resistance and workability while exhibiting flame retardancy (in particular, shortening of afterglow response), was strongly requested.

### CITATION LIST

### Patent Literature

PTL 1: JP 2010-121006 A
PTL 2: JP 2011-001528 A

### SUMMARY OF INVENTION

### (Technical Problem)

In view of the above, an object of the present invention is to provide a rubber composition for a hose, and a hose that can improve flame retardancy (in particular, shortening of afterglow response) and wear resistance, and ensure workability.

### (Solution to Problem)

A rubber composition for a hose of the present invention contains chloroprene rubber, butadiene rubber and styrene-butadiene rubber as rubber components, and silica, and contains 60 parts by mass to 80 parts by mass of chloroprene rubber in 100 parts by mass of the rubber components, the rubber components being compounded with 5 parts by mass to 25 parts by mass of the silica based on 100 parts by mass of the rubber components.

With the above constitution, it is possible to improve flame retardancy (in particular, shortening of afterglow response) and wear resistance, and ensure workability.

A hose of the present invention has a rubber layer consisting of a rubber composition for a hose of the present application.

With the above constitution, it is possible to improve flame retardancy (in particular, shortening of afterglow response) and wear resistance, and ensure workability.

### (Advantageous Effect of Invention)

According to the present invention, it is possible to provide a rubber composition for a hose, and a hose that can improve flame retardancy (in particular, shortening of afterglow response) and wear resistance, and ensure workability.

### BRIEF DESCRIPTION OF DRAWINGS

The present invention will be further described below with reference to the accompanying drawings, wherein:

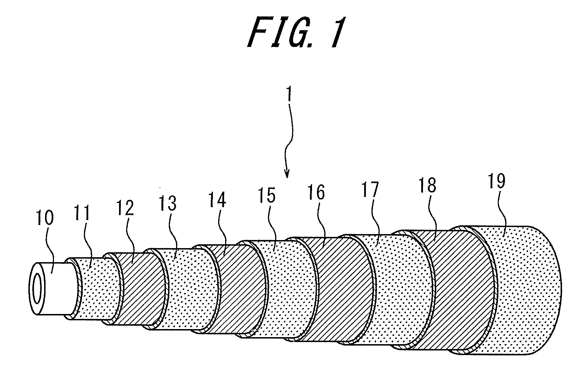

Fig. 1 is a perspective view showing an example of a layered structure of a hydraulic hose using a rubber composition for a hose of the present invention.

### DESCRIPTION OF EMBODIMENTS

### (Rubber Composition for Hose)

A rubber composition for a hose of the present invention contains at least rubber components and silica, and further contains a metal hydroxide compound and other components when necessary.

### <Rubber Components>

The rubber components contain at least chloroprene rubber (CR), butadiene rubber (BR), and styrene-butadiene rubber (SBR), and further contain other polymers when necessary.

### <<Chloroprene Rubber (CR)>>

The chloroprene rubber (CR) is a homopolymer (hereinafter, referred to as chloroprene polymer) obtained by simple polymerization of a chloroprene monomer, or a copolymer (hereinafter, referred to as chloroprene-based polymer) obtained by polymerization of a mixture (hereinafter, referred to as chloroprene-based monomer) of a chloroprene monomer and one or more types of other monomers that are copolymerizable with the chloroprene monomer.

### -Classification of Chloroprene Rubber-

The chloroprene rubber is classified into a sulfur modified type, a mercaptan modified type, and a xanthogen modified type depending on the type of molecular weight modifier used.

Any of the above modified types can be used as the chloroprene rubber. However, since the sulfur modified type is inferior in heat resistance of the polymer itself compared to the mercaptan modified type and the xanthogen modified type, the mercaptan modified type or the xanthogen modified type is preferably used if heat resistance is especially required.

### --Sulfur Modified Type--

The sulfur modified type is formed by plasticizing a copolymer obtained by copolymerization of sulfur and a chloroprene monomer or a chloroprene-based monomer with thiuram disulfide, and adjusting Mooney viscosity to a predetermined value.

### --Mercaptan Modified Type--

The mercaptan modified type is formed using alkylmercaptans such as n-dodecyl mercaptan, tert-dodecyl mercaptan, octylmercaptan and the like as a molecular weight modifier.

### --Xanthogen Modified Type--

The xanthogen modified type is formed using an alkylxanthogen compound as a molecular weight modifier. The alkylxanthogen compound is not particularly limited, and may be selected as appropriate depending on the purpose thereof. Examples thereof include dimethylxanthogen disulfide, diethylxanthogen disulfide, diisopropylxanthogen disulfide and diisobutylxanthogen disulfide and the like.

The usage amount of the alkylxanthogen compound is not particularly limited and may be selected as appropriate depending on the purpose thereof (i.e. structure of alkyl group or aimed molecular weight) as long as it is selected so that the molecular weight (or Mooney viscosity) of chloroprene rubber is appropriate. The usage amount thereof is preferably 0.05 parts by mass to 5.0 parts by mass, and more preferably 0.3 parts by mass to 1.0 part by mass, based on 100 parts by mass of a chloroprene monomer or a chloroprene-based monomer.

### -Content of Chloroprene Rubber (CR)-

The content of the chloroprene rubber (CR) is not particularly limited, and may be selected as appropriate depending on the purpose thereof as long as it is 60 parts by mass to 80 parts by mass in 100 parts by mass of the rubber components. The content thereof is preferably 65 parts by mass to 80 parts by mass, and more preferably 65 parts by mass to 75 parts by mass.

If the content of the chloroprene rubber (CR) is less than 60 parts by mass in 100 parts by mass of the rubber components, flame retardancy decreases (i.e. afterglow response becomes longer), and if the content thereof exceeds 80 parts by mass in 100 parts by mass of the rubber components, workability decreases. On the other hand, if the content of the chloroprene rubber (CR) is within the preferable range, it is advantageous from the viewpoint of flame retardancy and workability, and if the content thereof is within the more preferable range, it is even more advantageous.

### «Butadiene Rubber (BR)»

The butadiene rubber (BR) is a homopolymer (hereinafter, referred to as butadiene polymer) obtained by simple polymerization of a butadiene monomer, or a copolymer (hereinafter, referred to as butadiene-based polymer) obtained by polymerization of a mixture (hereinafter, referred to as butadiene-based monomer) of a butadiene monomer and one or more types of other monomers that are copolymerizable with the butadiene monomer.

### -cis-1,4 Bond Content of Butadiene Rubber (BR)-

The cis-1,4 bond content of the butadiene rubber (BR) is not particularly limited, and may be selected as appropriate depending on the purpose thereof. The content thereof is preferably 90% or more, more preferably 93% or more, and particularly preferably 95% or more.

If the cis-1,4 bond content is less than 90%, wear resistance may decrease. On the other hand, if the cis-1,4 bond content is within the preferable range, it is advantageous from the viewpoint of wear resistance, and if the content thereof is within the more preferable range or the particularly preferable range, it is even more advantageous.

The cis-1,4 bond content can be measured using ¹H-NMR, ¹³C-NMR, FT-IR and the like.

### -Content of Butadiene Rubber (BR)-

The content of the butadiene rubber (BR) in 100 parts by mass of the rubber components is not particularly limited, and may be selected as appropriate depending on the purpose thereof. The content thereof is preferably 10 parts by mass to 30 parts by mass, and more preferably 15 parts by mass to 25 parts by mass.

If the content of the butadiene rubber (BR) is less than 10 parts by mass in 100 parts by mass of the rubber components, wear resistance may decrease, and if the content thereof exceeds 30 parts by mass in 100 parts by mass of the rubber components, workability or flame retardancy may decrease due to the reduction in the amount of CR or SBR. On the other hand, if the content of the butadiene rubber (BR) is within the preferable range, it is advantageous from the viewpoint of achieving both wear resistance and flame retardancy, and if the content thereof is within the more preferable range, it is even more advantageous.

### «Styrene-Butadiene Rubber (SBR)»

The styrene-butadiene rubber (SBR) is a copolymer (hereinafter, referred to as styrene-butadiene copolymer) obtained by copolymerization of a styrene monomer and a butadiene monomer, or a copolymer (hereinafter, referred to as styrene-butadiene-based copolymer) obtained by polymerization of a mixture (hereinafter, referred to as styrene-butadiene-based monomer) of a styrene monomer and a butadiene monomer, and one or more types of other monomers that are copolymerizable with the styrene monomer and the butadiene monomer.

### --Monomer Copolymerizable with Styrene Monomer and Butadiene Monomer--

The monomer copolymerizable with styrene monomer and butadiene monomer is not particularly limited, and may be selected as appropriate depending on the purpose thereof. Examples thereof include conjugated diene monomers having 5 to 8 carbons such as 2-methyl-1,3-butadiene, 2,3-dimethyl-1,3-butadiene, 1,3-pentadiene, 1,3-hexadiene; and aromatic vinyl monomers such as p-methylstyrene, α-methylstyrene, vinylnaphthalene. These may be used alone or in combination of two or more.

### -Styrene Content of Styrene-Butadiene Rubber (SBR)-

The styrene content of the styrene-butadiene rubber (SBR) is not particularly limited, and may be selected as appropriate depending on the purpose thereof. The content thereof is preferably 20 mass% to 45 mass%, more preferably 20 mass% to 35 mass%.

If the styrene content of the styrene-butadiene rubber (SBR) is less than 20 mass%, workability may decrease, and if the content exceeds 45 mass%, wear resistance may decrease. On the other hand, if the styrene content of the styrene-butadiene rubber (SBR) is within the preferable range, it is advantageous from the viewpoint of workability and wear resistance, and if the content thereof is within the more preferable range, it is even more advantageous.

### -Content of Styrene-Butadiene Rubber (SBR)-

The content of the styrene-butadiene rubber (SBR) in 100 parts by mass of the rubber components is not particularly limited, and may be selected as appropriate depending on the purpose thereof. The content thereof is preferably 10 parts by mass to 30 parts by mass, and more preferably 10 parts by mass to 25 parts by mass.

If the content of the styrene-butadiene rubber (SBR) is less than 10 parts by mass in 100 parts by mass of the rubber components, workability may decrease, and if the content thereof exceeds 30 parts by mass in 100 parts by mass of the rubber components, wear resistance or flame retardancy may decrease due to the reduction in the content of CR or BR. On the other hand, if the content of the styrene-butadiene rubber (SBR) is within the preferable range, it is advantageous from the viewpoint of achieving both wear resistance and flame retardancy, and if the content thereof is within the more preferable range, it is even more advantageous.

### <<Mass Ratio of Butadiene Rubber (BR)/Styrene-Butadiene Rubber (SBR)>>

The mass ratio of butadiene rubber (BR)/styrene-butadiene rubber (SBR) is not particularly limited, and may be selected as appropriate depending on the purpose thereof. The ratio thereof is preferably 30/10 to 10/30, and more preferably 25/15 to 15/25.

If the mass ratio is [less than 10]/30, wear resistance may decrease, and if the mass ratio is [over 30]/10, workability may decrease. On the other hand, if the mass ratio is within the preferable range, it is advantageous from the viewpoint of achieving both wear resistance and workability, and if the mass ratio is within the more preferable range or the particularly preferable range, it is even more advantageous.

If 60 parts by mass to 80 parts by mass of chloroprene rubber, 10 parts by mass to 30 parts by mass of butadiene rubber, 10 parts by mass to 30 parts by mass of styrene-butadiene rubber are contained in 100 parts by mass of the rubber components, it is possible to improve flame retardancy (in particular, shortening of afterglow response) and wear resistance, and ensure workability.

### «Other Polymers»

The other polymers are not particularly limited, and may be selected as appropriate depending on the purpose thereof. Examples include natural rubber, chlorosulfonated polyethylene (CSM), chlorinated polyethylene (CPE), nitrile rubber (NBR), hydrogenated acrylonitrile-butadiene rubber (H-NBR), acrylic rubber (ACM), ethylene-propylene rubber (EPDM), epichlorohydrin rubber (CO), hydrin rubber (ECO), silicone rubber (Q), fluororubber (FKM) and the like. These may be used alone or in combination of two or more.

Among these, CSM and CPE are preferred from the viewpoint of flame retardancy.

### <Silica>

By including the silica in the rubber composition for a hose, it is possible to improve flame retardancy (in particular, to shorten afterglow response), and enhance reinforcing properties to thereby improve wear resistance.

The nitrogen absorption specific surface area (N₂SA) of the silica is not particularly limited, and may be selected as appropriate depending on the purpose thereof. The area thereof is preferably 70m²/g to 300m²/g, more preferably 100m²/g to 280m²/g, and particularly preferably 150m²/g to 250m²/g.

If the nitrogen absorption specific surface area (N₂SA) of the silica is less than 70m²/g, flame retardancy and wear resistance may decrease, and if the area thereof exceeds 300m²/g, dispersibility and workability may deteriorate. On the other hand, if the nitrogen absorption specific surface area (N₂SA) of the silica is within the preferable range, it is advantageous from the viewpoint of balance among flame retardancy, wear resistance and workability, and if the area thereof is within the more preferable range or the particularly preferable range, it is even more advantageous.

The compounding amount of the silica is not particularly limited, and may be selected as appropriate depending on the purpose thereof as long as it is 5 parts by mass to 25 parts by mass based on 100 parts by mass of the rubber components. The compounding amount thereof is preferably 7 parts by mass to 15 parts by mass based on 100 parts by mass of the rubber components.

If the compounding amount of the silica is less than 5 parts by mass, flame retardancy deteriorates (i.e. afterglow response lengthens), and if the compounding amount thereof exceeds 25 parts by mass, wear resistance decreases. On the other hand, if the compounding amount of the silica is within the preferable range, it is advantageous from the viewpoint of achieving both flame retardancy and wear resistance.

### <Metal Hydroxide Compound>

By including the metal hydroxide compound in the rubber composition for a hose, it is possible to improve flame retardancy. However, wear resistance decreases. Accordingly, if wear resistance is especially required, it is preferable not to add the metal hydroxide compound to the rubber composition for a hose (or to reduce the addition amount thereof).

The metal hydroxide compound is not particularly limited, and may be selected as appropriate depending on the purpose thereof. Examples include aluminum hydroxide, magnesium hydroxide and the like.

The compounding amount of the metal hydroxide compound is not particularly limited, and may be selected as appropriate depending on the purpose thereof. The compounding amount thereof is preferably 10 parts by mass or less, more preferably 8 parts by mass or less, particularly preferably 5 parts by mass or less, based on 100 parts by mass of the rubber components. The compounding amount may also be 0 parts by mass (i.e. the metal hydroxide compound does not have to be compounded).

If the compounding amount of the metal hydroxide compound is 10 parts by mass or less based on 100 parts by mass of the rubber components, it is possible to prevent wear resistance from decreasing.

If the compounding amount of the metal hydroxide compound exceeds 10 parts by mass based on 100 parts by mass of the rubber components, wear resistance may significantly decrease.

### <Other Components>

As the other components, compounding agents normally used in the rubber industry such as, filler other than silica, plasticizer, vulcanizing agent, vulcanization accelerator, age resister, anti-scorch agent, softening agent, zinc oxide, stearic acid, silane coupling agent, organic acid cobalt, and adhesive aids such as resorcin, hexamethylenetetramine, melamine resin etc. may be selected as appropriate and compounded in a range that will not interfere with the purpose of the present invention. Commercially available products may be suitably used for these compounding agents. The rubber composition can be manufactured by compounding various compounding agents appropriately selected when necessary with rubber components, and then performing mixing, warming, extruding and the like.

Carbon black is suitable as the filler other than silica. In particular, FEF class carbon black (with iodine adsorption quantity of 20g/kg to 50g/kg, and DBP oil absorption amount of 20(×10⁻⁵m³/kg) to 150(×10⁻⁵m³/kg)) is desirable as carbon black from the viewpoint of achieving both wear resistance and extrudability.

### (Hose)

The hose of the present invention has at least a rubber layer, and further has rubber layers other than the rubber layer, and other members when necessary.

### -Rubber Layer-

The rubber layer is not particularly limited, and may be selected as appropriate depending on the purpose thereof as long as it is made of a rubber composition for a hose of the present invention. Examples include an outer cover rubber layer and the like.

The shape, structure and size of the outer cover rubber layer are not particularly limited, and may be selected as appropriate depending on the purpose thereof.

The thickness of the outer cover rubber layer is not particularly limited, and may be selected as appropriate depending on the purpose thereof. The thickness thereof is preferably 0.3 mm to 3.5 mm, more preferably 0.7 mm to 3.2 mm, and particularly preferably 1.0 mm to 3.0 mm.

If the thickness of the rubber layer is less than 0.3 mm, it may wear away and lead to short life, and if the thickness thereof exceeds 3.5 mm, flame retardancy may decrease due to an increase in the amount of combustible components, or the rubber layer may become inferior in softening, weight saving and space saving as a hose. On the other hand, if the thickness of the rubber layer is within the preferable range, it is advantageous from the viewpoint of flame retardancy and wear life, and if the thickness thereof is within the more preferable range or the particularly preferable range, it is even more advantageous.

For example, as shown in Fig. 1, the hose has an inner rubber layer (inner tube rubber) 10, reinforcing layers 12, 14, 16, 18 having brass plated wires, intermediate rubber layers (intermediate rubbers) 11, 13, 15, 17, and an outer rubber layer (outer cover rubber) 19.

The rubber composition for a hose of the present invention is suitable for forming an outer rubber layer (outer cover rubber) 19.

The structure of the hose comprises multiple layers arranged with, from the inside, an inner rubber layer (inner tube rubber) 10, reinforcing layers 12, 14, 16, 18 and intermediate rubber layers (intermediate rubbers) 11, 13, 15, 17 each consisting of four layers, and an outer rubber layer (outer cover rubber) 19. However, the structure thereof is not limited to the above and may be, for example, a three layer structure successively laminated with an inner rubber layer (inner tube rubber), a reinforcing layer, and an outer rubber layer (outer cover rubber), or a six layer structure successively laminated with an inner rubber layer (inner tube rubber), a fiber reinforcing layer, intermediate rubber layers (intermediate rubber reinforcing layers) consisting of three layers, and an outer rubber layer (outer cover rubber). The structure thereof may be selected as appropriate depending on the required characteristics of the hose. Further, it is not necessary for all of the reinforcing layers to be formed of brass plated wires, but reinforcing layers formed partly of organic fibers can also be used. In addition, it is possible to dispose a layer of resin such as ultra high molecular weight polyethylene to the outermost layer, and apply to a hose with improved wear resistance.

### <Method for Manufacturing Hose>

The method for manufacturing a hose of the present invention includes, for example, as described below, an inner tube extruding step, a knitting step, an outer cover extruding step, a resin mold coating step, a vulcanizing step, a resin mold peeling step, a mandrel extracting step, and further, other steps selected as appropriate when necessary.

First, rubber composition for inner rubber layer 10 is extrusion molded on the outer part of a core (mandrel) with a diameter almost equal to the inside diameter of the hose to coat the mandrel, to thereby form an inner rubber layer 10 (inner tube extruding step). Next, a predetermined number of brass plated wires are knitted on the outer part of inner rubber layer 10 formed by the inner rubber extruding step to form a reinforcing layer 12 (knitting step). Then, a sheet of the rubber composition for a hose of the present invention is inserted and formed to the inner part of the reinforcing layer 12, to thereby form an intermediate rubber layer 11. This is repeated several times to successively laminate reinforcing layers 14, 16, 18 and intermediate rubber layers 13, 15, 17, to form an outer rubber layer 19 consisting of the rubber composition for a hose of the present invention (outer cover extruding step). Further, the outer part of an outer rubber layer 19 formed in the outer cover extruding step is appropriately coated with a suitable resin (resin mold coating step), and this in turn is vulcanized under a prescribed condition (vulcanizing step). After vulcanizing, the above coating resin is peeled (resin mold peeling step), and then by removing the mandrel (mandrel extracting step), a hose with intermediate rubber layers 11, 13, 15, 17 and reinforcing layers 12, 14, 16, 18 between the inner rubber layer 10 and the outer rubber layer 19 is obtained.

### EXAMPLES

In the following, the present invention will be described in further detail with reference to examples thereof. However, the present invention is no way limited to the following examples.

First, rubber compositions (rubber sheets) described below were prepared. The evaluation method of the rubber compositions is indicated below. The units of the values described as compounding amounts in tables 1 to 4 are "parts by mass". Further, in tables 1 to 4, the rubber compositions of each example and comparative example contain (i) 80 parts by mass of carbon black (#65, manufactured by Asahi Carbon Co., Ltd.), (ii) 15 parts by mass of aroma oil (anti-MOLEX NH-60T, manufactured by Nippon Oil Corporation), (iii) 5 parts by mass of zinc oxide, (iv) 3 parts by mass of magnesium oxide, (v) 2 parts by mass of wax (OZOACE0017, manufactured by Nippon Seiro Co., Ltd.), (vi) 3 parts by mass of age resister (ANTIGENE6C, manufactured by Sumitomo Chemical Co., Ltd.), (vii) 2 parts by mass of cobalt stearate, (viii) 2.5 parts by mass of sulfur, (ix) 1 part by mass of vulcanization accelerator NS.

### <Evaluation Method of Rubber Compositions> (1) Flame Retardancy (Flame Response)

The flame retardancy (flame response) was evaluated by the following method based on flame retardancy (flame response) evaluation of MSHA standards (Mine Safety and Health Administration standards) ASTP5007. Rubber sheets were press-vulcanized with a mold at 150 °C for 60 minutes, and then cut into a predetermined size to obtain evaluation samples with thickness of 3 mm. Evaluation was made using these samples.

The obtained evaluation results are shown in Tables 1 to 4. Here, regarding the flame response, the smaller value indicates better flame retardancy.

The evaluation criteria is as follows.
Excellent: 0 seconds or more and 10 seconds or less
Good: more than 10 seconds and 30 seconds or less
Fair: more than 30 seconds and 60 seconds or less
Poor: more than 60 seconds

### (2) Flame Retardancy (Afterglow Response)

The flame retardancy (afterglow response) was evaluated by the following method based on flame retardancy (afterglow response) evaluation of MSHA standards (Mine Safety and Health Administration standards). Rubber sheets were press-vulcanized with a mold at 150 °C for 60 minutes, and then cut into a predetermined size to obtain evaluation samples with thickness of 3 mm. Evaluation was made using these samples.

The obtained evaluation results are shown in Tables 1 to 4. Here, regarding the afterglow response, the smaller value indicates better flame retardancy.

The evaluation criteria is as follows.
Excellent: 0 seconds or more and 90 seconds or less
Good: more than 90 seconds and 180 seconds or less
Fair: more than 180 seconds and 230 seconds or less
Poor: more than 230 seconds

### (3) Wear Resistance (DIN Abrasion Loss)

The wear resistance (DIN abrasion loss) was measured in accordance with JIS K 6264.

The obtained evaluation results (index of when comparative example 1 is set as 100) are shown in Tables 1 to 4. Here, regarding the wear resistance (DIN abrasion loss), the smaller value indicates a better result. The evaluation samples were obtained by punching out rubber sheets vulcanized at 150 °C for 60 minutes into a predetermined size.

### (4) Workability (Storage Stability)

The workability (storage stability) was evaluated in accordance with the following evaluation method.

First, after kneading rubber, the samples were stored in a thermohygrostat bath of 95% RH at 40°C for 72 hours. Then, Mooney scorch test defined by JIS K 6300 was carried out at 130°C, and determination was made based on Mooney viscosity and scorch time.

The obtained evaluation results are shown in Tables 1 to 4.

The evaluation criteria is as follows.
Good: Mooney viscosity of lower than 100 and scorch time of 10 minutes or more
Fair: Mooney viscosity of lower than 100 and scorch time of less than 10 minutes
Poor: Mooney viscosity of 100 or higher

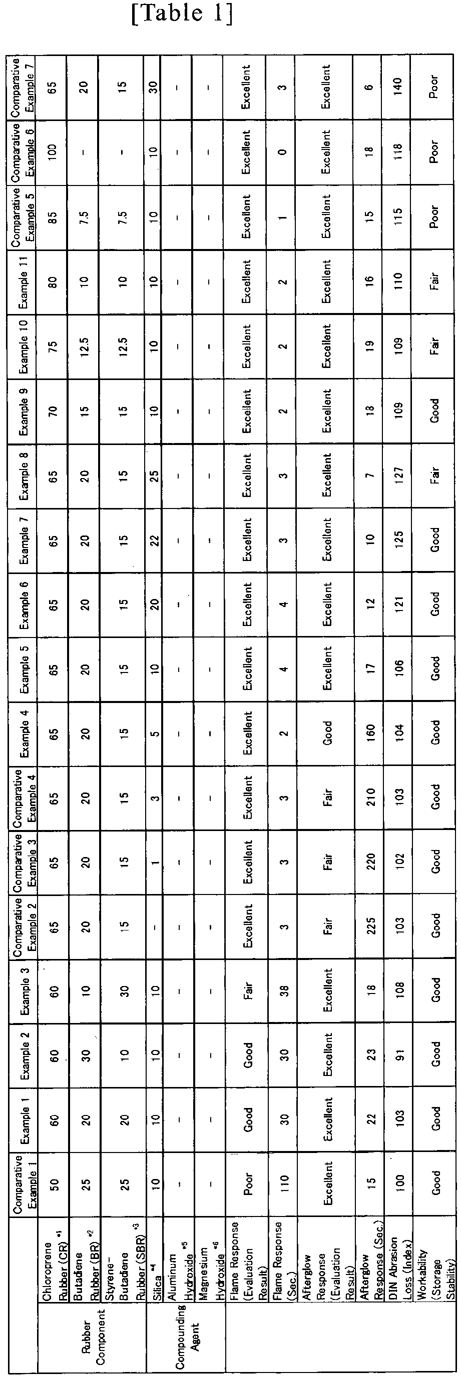

**[Table 2]**

| | | Comparative Example 8 | Example 12 | Example 13 | Example 14 | Example 15 | Example 16 | Example 17 | Example 18 | Example 19 | Exampl e 20 | Example 21 | Example 22 | Examples 23 | Example 24 | Example 25 | Comparative Example 9 | Comparative Example 10 |
|---|---|---|---|---|---|---|---|---|---|---|---|---|---|---|---|---|---|---|
| Rubber Component | Chloroprene Rubber (CR) ^{*1} | 50 | 60 | 60 | 60 | 65 | 65 | 65 | 65 | 65 | 65 | 65 | 65 | 70 | 75 | 80 | 85 | 100 |
| | Butadiene Rubber (BR)*² | 25 | 20 | 30 | 10 | 20 | 20 | 20 | 20 | 20 | 20 | 20 | 20 | 15 | 12.5 | 10 | 7.5 | - |
| | Styrene-Butadiene Rubber (SBR) *³ | 25 | 20 | 10 | 30 | 15 | 15 | 15 | 15 | 15 | 15 | 15 | 15 | 15 | 12.5 | 10 | 7.5 | - |
| Compounding Agent | Silica*⁴ | 10 | 10 | 10 | 10 | 10 | 10 | 10 | 10 | 10 | 10 | 10 | 10 | 10 | 10 | 10 | 10 | 10 |
| | Aluminum Hydroxide *⁵ | 5 | 5 | 5 | 5 | - | 1 | 3 | 5 | 10 | 20 | 22 | 25 | 10 | 10 | 10 | 10 | 10 |
| | Magnesium Hydroxide *⁶ | - | - | - | - | - | - | - | - | - | - | - | - | - | - | - | - | - |
| | Flame Response (Evaluation Result) | Poor | Good | Good | Good | Excellent | Excellent | Excelknt | Excelknt | Excellent | Excellent | Excellent | Excellent | Excellent | Excellent | Excellent | Excellent | Excellent |
| | Flame Response (Sec.) | 108 | 25 | 30 | 20 | 4 | 4 | 3 | 4 | 3 | 2 | 1 | 1 | 3 | 2 | 1 | 1 | 1 |
| | Afterglow Response (Evaluation Result) | Excellent | Excellent | Excellent | Excellent | Excellent | Excelknt | Excellent | Excelknt | Excellent | Excellent | Excellent | Excellent | Excellent | Excellent | Excellent | Excellent | Excellent |
| | Afterglow Response (Sec.) | 10 | 13 | 14 | 15 | 10 | 33 | 27 | 13 | 8 | 5 | 5 | 3 | 10 | 7 | 8 | 7 | 4 |
| | DIN Abrasion Loss (Index) | 110 | 116 | 114 | 118 | 104 | 106 | 109 | 117 | 122 | 145 | 153 | 165 | 122 | 124 | 128 | 130 | 135 |
| | Workability (Storage Stability) | Good | Good | Good | Good | Good | Good | Good | Good | Good | Good | Good | Good | Good | Fair | Fair | Poor | Poor |

**[Table 3]**

| | | Example 26 | Example 27 | Example 28 |
|---|---|---|---|---|
| Rubber Component | Chloroprene Rubber (CR)*¹ | 65 | 65 | 65 |
| | Butadiene Rubber (BR)*² | 20 | 20 | 20 |
| | Styrene-Butadiene Rubber (SBR)*³ | 15 | 15 | 15 |
| Compounding Agent | Silica*⁴ | 10 | 10 | 10 |
| | Aluminum Hydroxide *⁵ | - | - | - |
| | Magnesium Hydroxide *⁶ | 5 | 10 | 20 |
| | Flame Response (Evaluation Result) | Excellent | Excellent | Excellent |
| | Flame Response (Sec.) | 4 | 3 | 2 |
| | Afterglow Response (Evaluation Result) | Excellent | Excellent | Excellent |
| | Afterglow Response (Sec.) | 16 | 15 | 8 |
| | DIN Abrasion Loss (Index) | 114 | 123 | 141 |
| | Workability (Storage Stability) | Good | Good | Good |

**[Table 4]**

| | | Comparative Example 11 | Comparative Example 12 | Comparative Example 13 | Comparative Example 14 | Comparative Example 15 | Comparative Example 16 |
|---|---|---|---|---|---|---|---|
| Rubber Component | Chloroprene Rubber (CR) *¹ | 50 | 85 | 100 | 50 | 85 | 100 |
| | Butadiene Rubber (BR)*² | 25 | 7.5 | - | 25 | 7.5 | - |
| | Styrene-Butadiene Rubber (SBR) *³ | 25 | 7.5 | - | 25 | 7.5 | - |
| Compounding Agent | Silica*⁴ | - | - | - | - | - | - |
| | Aluminum Hydroxide *⁵ | - | - | - | 5 | 5 | 5 |
| | Magnesium Hydroxide *⁶ | - | - | - | - | - | - |
| | Flame Response (Evaluation Result) | Poor | Excellent | Excellent | Poor | Excellent | Excellent |
| | Flame Response (Sec.) | 120 | 1 | 0 | 100 | 1 | 0 |
| | Afterglow Response (Evaluation Result) | Poor | Fair | Good | Poor | Good | Good |
| | Afterglow Response (Sec.) | 250 | 190 | 155 | 245 | 145 | 115 |
| | DIN Abrasion Loss (Index) | 100 | 118 | 120 | 104 | 123 | 127 |
| | Workability (Storage Stability) | Good | Poor | Poor | Good | Poor | Poor |

*1 to *6 in tables 1 to 4 indicate the following.
*1 Chloroprene Rubber (CR): manufactured by Denki Kagaku Kogyo Kabushiki Kaisha, Denka Chloroprene "M40"
*2 Butadiene Rubber (BR): manufactured by JSR Corporation, "BR01" (cis-1,4 bond content: 95%)
*3 Styrene-Butadiene Rubber (SBR): manufactured by JSR Corporation, "JSR1500"
*4 Silica: manufactured by Tosoh Silica Corporation, "Nipsil AQ"
*5 Aluminum Hydroxide: manufactured by Showa Denko K.K., "HIGILITE H-42S"
*6 Magnesium Hydroxide: Kyowa Chemical Industry Co., Ltd., "KISMA 5A"

It can be seen from tables 1 to 4 that examples 1 to 28 formed by containing chloroprene rubber, butadiene rubber, and styrene-butadiene rubber as rubber components, and silica, and containing 60 parts by mass to 80 parts by mass of chloroprene rubber in 100 parts by mass of the rubber components, the rubber components being compounded with 5 parts by mass to 25 parts by mass of the silica based on 100 parts by mass of the rubber components can improve flame retardancy, wear resistance and workability compared to comparative examples 1 to 16 which are not formed by containing chloroprene rubber, butadiene rubber, and styrene-butadiene rubber as rubber components, and silica, and containing 60 parts by mass to 80 parts by mass of chloroprene rubber in 100 parts by mass of the rubber components, the rubber components being compounded with 5 parts by mass to 25 parts by mass of the silica based on 100 parts by mass of the rubber components.

### INDUSTRIAL APPLICABILITY

The rubber composition for a hose of the present invention can be suitably used in, for example, an intermediate rubber layer and/ or an outer cover rubber layer of a hydraulic hose used in construction machinery, roof supporters and the like.

### REFERENCE SIGNS LIST

- 1: Hose
- 10: Inner Rubber Layer (Inner Tube Rubber)
- 11: Intermediate Rubber Layer (Intermediate Rubber)
- 12: Reinforcing Layer
- 13: Intermediate Rubber Layer (Intermediate Rubber)
- 14: Reinforcing Layer
- 15: Intermediate Rubber Layer (Intermediate Rubber)
- 16: Reinforcing Layer
- 17: Intermediate Rubber Layer (Intermediate Rubber)
- 18: Reinforcing Layer
- 19: Outer Rubber Layer (Outer Cover Rubber)

## Claims

1. A rubber composition containing chloroprene rubber, butadiene rubber and styrene-butadiene rubber as rubber components, and silica, and
containing 60 parts by mass to 80 parts by mass of chloroprene rubber in 100 parts by mass of the rubber components, the rubber components being compounded with 5 parts by mass to 25 parts by mass of the silica based on 100 parts by mass of the rubber components.

2. The rubber composition according to Claim 1 wherein 60 parts by mass to 80 parts by mass of chloroprene rubber, 10 parts by mass to 30 parts by mass of butadiene rubber, 10 parts by mass to 30 parts by mass of styrene-butadiene rubber are contained in 100 parts by mass of the rubber components.

3. The rubber composition according to Claim 1, wherein the rubber components are compounded with 10 parts by mass or less of metal hydroxide compound based on 100 parts by mass of the rubber components.

4. A hose having a rubber layer consisting of the rubber composition according to Claim 1.

## Patentansprüche

1. Kautschukzusammensetzung, enthaltend Chloropren-Kautschuk, Butadien-Kautschuk und Styrol-Butadien-Kautschuk als Kautschukkomponenten, sowie Siliciumdioxid, und
enthaltend 60 Masseteile bis 80 Masseteile Chloropren-Kautschuk in 100 Masseteilen der Kautschukkomponenten, wobei die Kautschukkomponenten mit 5 Masseteilen bis 25 Masseteilen des Siliciumdioxids, bezogen auf 100 Masseteile der Kautschukkomponenten, kompoundiert sind.

2. Kautschukzusammensetzung nach Anspruch 1, wobei 60 Masseteile bis 80 Masseteile Chloropren-Kautschuk, 10 Masseteile bis 30 Masseteile Butadien-Kautschuk, 10 Masseteile bis 30 Masseteile Styrol-Butadien-Kautschuk in 100 Masseteilen der Kautschukkomponenten enthalten sind.

3. Kautschukzusammensetzung nach Anspruch 1, wobei die Kautschukkomponenten mit 10 Masseteilen oder weniger einer Metallhydroxid-Verbindung, bezogen auf 100 Masseteile der Kautschukkomponenten, kompoundiert sind.

4. Schlauch mit einer Kautschukschicht, die aus der Kautschukzusammensetzung nach Anspruch 1 besteht.

## Revendications

1. Composition de caoutchouc contenant du caoutchouc de chloroprène, du caoutchouc de butadiène et du caoutchouc de styrène-butadiène comme composants de caoutchouc, et de la silice, et
contenant 60 parties en masse à 80 parties en masse de caoutchouc de chloroprène sur 100 parties en masse des composants de caoutchouc, les composants de caoutchouc étant malaxés avec 5 parties en masse à 25 parties en masse de la silice sur la base de 100 parties en masse des composants de caoutchouc.

2. Composition de caoutchouc selon la revendication 1 où de 60 parties en masse à 80 parties en masse de caoutchouc de chloroprène, de 10 parties en masse à 30 parties en masse de caoutchouc de butadiène, de 10 parties en masse à 30 parties en masse de caoutchouc de styrène-butadiène sont contenues dans 100 parties en masse des composants de caoutchouc.

3. Composition de caoutchouc selon la revendication 1, où les composants de caoutchouc sont malaxés avec 10 parties en masse ou moins de composé d'hydroxyde métallique sur la base de 100 parties en masse des composants de caoutchouc.

4. Tuyau souple ayant une couche de caoutchouc constituée de la composition de caoutchouc selon la revendication 1.
